# EUROPÄISCHE PATENTSCHRIFT

(11) **EP 4 066 914 B1**
(45) Veröffentlichungstag und Bekanntmachung des Hinweises auf die Patenterteilung: **30.07.2025**
(21) Anmeldenummer: 22151923.4
(22) Anmeldetag: 18.01.2022
(51) Int. Cl.: B01D 24/00, B01D 24/12, B01D 24/42, B01D 35/027, B01D 35/153, C02F 1/00, C02F 1/28, C02F 1/42

(54) **WASSERTANK MIT TANKAUSLASSVENTIL UND WASSERFILTERPATRONE MIT ZWEI KONZENTRISCH ZUEINANDER ANGEORDNETEN WASSERFILTERPATRONENAUSLÄSSEN**
WATER TANK WITH TANK DISCHARGE VALVE AND WATER FILTER CARTRIDGE WITH TWO CONCENTRIC WATER FILTER CARTRIDGE OUTLETS
RÉSERVOIR D'EAU POURVU DE SOUPAPE DE SORTIE DE RÉSERVOIR ET CARTOUCHE DE FILTRATION D'EAU POURVUE DE DEUX SORTIES CONCENTRIQUES DE CARTOUCHE DE FILTRATION D'EAU

(30) Priorität: 29.03.2021 DE 102021107855
(43) Veröffentlichungstag der Anmeldung: 05.10.2022
(73) Patentinhaber: ACLARIS GmbH, Lindau Zweigniederlassung Rebstein, 9445 Rebstein (CH)
(72) Erfinder: Heitele, Bernd-Karl-Josef, 9437 Marbach (CH)
(74) Vertreter: RavensPAT Patentanwälte Partnerschaft mbB

(56) Entgegenhaltungen:
- WO-A1-2016/110321
- WO-A1-2017/037701
- GB-A- 993 876
- KR-Y1- 200 404 491
- US-A1- 2020 369 537

## Beschreibung

Die Erfindung betrifft einen Wassertank mit einer Wasserfilterpatrone sowie ein damit ausgestattetes Wasser aufbereitendes Gerät nach den Oberbergriffen der Ansprüche 1 und 18.

### Stand der Technik:

Wasser aufbereitende Geräte erfreuen sich immer mehr Beliebtheit. Zum einen in der Form von Wasser kalt aufbereitenden Geräten und zum anderen in der Form von Wasser heiß aufbereitenden Geräten.

Wasser kalt aufbereitende Geräte können beispielsweise Trinkwasserspender sein. Wasser heiß aufbereitende Geräte können beispielsweise Kaffee- und/oder Teemaschinen oder dgl. sein.

Um sicherzustellen, dass das mit diesen Geräten/Maschinen entsprechend aufbereitete Wasser den betreffenden Gesundheitsanforderungen entspricht, ist üblicherweise zumindest eine dieser Aufbereitung vorangehende Filterung des verwendeten Wassers mit Aktivkohle vorgesehen, ggf. auch eine Filtrierung zur Entfernung unerwünschter Geschmacksstoffe.

Bei Wasser heiß aufbereitenden Maschinen ist üblicher Weise auch eine Filterstrecke zur Entkalkung des verwendeten Wassers und damit zum Schutz der damit in Kontakt kommenden Maschinenteile, wie Heizung und Rohrleitungen, vorgesehen.

Die Dokumente US 2020/369537 und GB 993 876 sind relevante Stand der Technik.

Aufgabe und Vorteile der Erfindung:
Der Erfindung liegt die Aufgabe zugrunde, eine Wasserfilter- und Anschlussstruktur bereitzustellen, mit der eine Wasser aufbereitende Maschine gemäß des einleitend beschriebenen Standes der Technik, bei bestmöglicher Ausnützung des Tankvolumens zur Wasserbevorratung, zuverlässig mit Wasser sowohl für eine Kaltaufbereitung als auch für eine Heißaufbereitung versorgt werden kann.

Die Lösung der Aufgabe erfolgt ausgehend von den Oberbegriffen der Ansprüche 1 und 18 durch deren kennzeichnende Merkmale. In den Unteransprüchen sind vorteilhafte und zweckmäßige Ausführungen angegeben.

Dementsprechend betrifft die Erfindung einen **Wassertank mit Wasserfilterpatrone,** die dadurch gekennzeichnet sind, dass die Wasserfilterpatrone zwei konzentrisch zueinander angeordnete Wasserfilterpatronenauslässe umfasst.

Dies ermöglicht die Bereitstellung zweier Wasser- oder Filtratströme, die in einer einzigen Wasserfilterpatrone jedoch für unterschiedliche Anwendungszwecke (nachfolgende Kaltwasseraufbereitung und nachfolgende Heißwasseraufbereitung in einer Getränke aufbereitenden Maschine) über jeweils unterschiedliche Aufbereitungsstrecken geführt sind, und dementsprechend auch aus einem, beide Filterstrecken der einen Wasserfilterpatrone gemeinsam speisenden Wassertank versorgt werden.

Bei der Erhitzung von Wasser (Heißwasseraufbereitung) lösen sich ab einer Temperatur von über 60 °C insbesondere ab 65 °C Mineralien aus dem Wasser und lagern sich an den sie umgebenden Oberflächen ab, insbesondere in der Form von Kalk. Dies wirkt sich nachteilig auf den Betrieb und die Lebensdauer der davon betroffenen Maschinenkomponenten und schlussendlich auch der Maschine aus. Einerseits isolieren solche Ablagerungen und reduzieren damit den Wirkungsgrad der Heizung und andererseits reduzieren sie zunehmend den wirksamen Querschnitt der betroffenen Leitungen.

Demgegenüber spielt dieser Verkalkungseffekt bei der Bereitstellung von kaltem, nicht erhitztem Wasser, z.B. in der Form eines Trinkwasserspenders, eine vergleichswese untergeordnete Rolle. Die Anforderungen an die Filterung des dafür verwendeten Speisewassers können deshalb entsprechend niedriger, zumindest jedoch anders als an die für die Heißwasseraufbereitung sein.

Um die Wirkung des Filtermaterials für die Heißwasseraufbereitung bestmöglich nutzbar machen zu können, wird deshalb dafür ein erster, separater Strömungskanal durch die Wasserfilterpatrone bereitgestellt, insbesondere bevorzugt nur dafür. Dieser Strömungskanal mündet im ersten Wasserfilterpatronenauslass. Ein zweiter, leitungstechnisch vom ersten getrennter Strömungskanal für die Versorgung der Kaltwasseraufbereitung Strömungskanal mündet im zweiten Wasserfilterpatronenauslass.

Der zur Speisung für die in der Maschine nachfolgende Heißwasseraufbereitung vorgesehene, erste Strömungskanal oder Strömungspfad durch die Wasserfilterpatrone kann zur Vermeidung solcher Ausfällungen und Kalkablagerungen dementsprechend eine von dem aufzubereitenden Wasser zu durchströmende Filterkammer mit einem Entkalkungsmittel umfassen, die insbesondere einen Ionentauscher enthalten kann.

Für den Anschluss der beiden voneinander getrennt ausgebildeten Wasserfilterpatronenauslässe am Wassertank ist insgesamt lediglich ein einzelnes, Wasser durchleitendes Anschlusselement mit zwei leitungstechnisch voneinander getrennten Durchleitungen zur Ausleitung der zwei separat aus der Wasserfilterpatrone herausgeführten Wasserströme erforderlich.

Dies hat den Vorteil, dass nur an einer gemeinsamen Kontaktstelle zwischen Wasserfilterpatrone und Wassertank zwei separat ausgebildete Wasserdurchleitungen abgedichtet werden müssen. Dies ist, insbesondere bei der Trennung und wieder Zusammenführung des Wassertanks von und mit einer mit dem Wassertank und der Wasserfilterpatrone betriebenen Getränke aufbereitenden Maschine sehr viel einfacher und zuverlässiger zu bewerkstelligen, als beispielsweise bei zwei getrennt voneinander ausgebildeten Wasserdurchleitungen, die dazu immer gleichzeitig und korrekt ausgerichtet sein müssen, um unerwünschtes Austreten von Wasser im Verbindungsbereich zu vermeiden.

Dies ist wichtig, da der Wassertank üblicherweise zu jedem Nachfüllvorgang von der Getränke aufbereitender Maschine abgenommen, mit Wasser befüllt und wieder Wasser leitend mit der Maschine verbunden werden. und dabei sollte möglichst kein Wasser aus der zur Wasserführung vorgesehenen Struktur zwischen Wassertank und/oder der Wasserfilterpatrone und der Maschine austreten und in unerwünschter Weise den Tankanschlussbereich der Maschine wässern.

Denn, derart austretendes Wasser hat nicht nur einen unschönen, anwendungsunfreundlichen Effekt indem es schon alleine aus hygienischen und optischen Gründen entfernt werden sollte. Es kann auch den zuverlässigen Betrieb der Maschine gefährden, indem möglicher Weise durch Eindringen des Wassers in die Maschine Teile dieser defekt werden könnten, oder ggf. auch durch dessen Kontakt mit elektrischen Leitungen die Gefahr eines elektrischen Schlages für Nutzer der Maschine auftreten könnte.

Der erste der beiden konzentrisch zueinander angeordneten Wasserfilterpatronenauslässe kann zumindest axial, vorzugsweise auch radial im Gehäuse der Wasserfilterpatrone beweglich angeordnet sein.

Dadurch kann er fest und zuverlässig dichtend mit einem komplementären, ebenfalls beweglichen, jedoch am Wassertank angeordneten Dichtelement verbunden werden, welches insbesondere als federbelastetes Wassertankauslassventil ausgebildet sein kann. Bevorzugt ist dieser erste Wasserfilterpatronenauslass dabei mit dem Ventilstößel des betreffenden Wassertankauslassventils verbindbar ausgebildet.

Bei dem Wassertankauslassventil handelt es sich bevorzugt um das dem zweiten, äußeren der beiden konzentrisch zueinander angeordneten Wasserfilterpatronenauslässe zugeordnete Wassertankauslassventil.

Durch die dem ersten Wasserfilterpatronenauslass verliehene Beweglichkeit kann dieser Öffnungs- und Schließbewegungen des Wassertankauslassventils gegenüber dem Wassertank mitvollziehen, ohne jegliche relative Positionsänderung zwischen dem Wassertankauslassventil und dem Wasserfilterpatronenauslass.

Das heißt, wenn der Ventilstößel dieses zweiten Wassertankauslassventils betätigt wird, dann öffnet sich dieses Ventil und gibt damit den zweiten Wasserfilterpatronenauslass, bei entsprechend befülltem Wassertank, zur Entnahme des über den zweiten Wasserfilterkanal aufbereiten Wassers frei.

Der erste Wasserfilterpatronenauslass kann sich dabei mit dem Ventilstößel des zweiten Wassertankauslassventils mitbewegen. Die Abdichtung des ersten Wasserfilterpatronenauslasses erfolgt durch ein weiteres, dem ersten Wasserfilterpatronenauslass zugeordnetes Wassertankauslassventil, welches konzentrisch innerhalb des dem zweiten Wasserfilterpatronenauslass zugeordneten Wassertankauslassventils angeordnet ist.

Dieses weitere, dem ersten Wasserfilterpatronenauslass zugeordnete Wassertankauslassventil wird, zur Vereinheitlichung der Bezüge zwischen den unterschiedlichen Bauteilen und zur verständlicheren Zuordnung unter Bezugnahme auf den ersten Strömungskanal durch die Wasserfilterpatrone, als erstes Wassertankauslassventil bezeichnet. Entsprechendes gilt für das dem zweiten Strömungskanal zugeordnete und somit als zweites Wassertankauslassventil bezeichnete Wassertankauslassventil, sowie auch für alle weiteren dem jeweiligen Strömungskanal bis zur Getränke aufbereitenden Maschine zur Wasserführung nachfolgenden Bauteile.

Der erste, beweglich angeordnete Wasserfilterpatronenauslass kann steckelementartig mit einem rohrförmigen Abschnitt zur wasserdichten Interaktion mit einem komplementären, tankseitig angeordneten Wasserfilterpatronen-Anschlusselement, insbesondere dem Tankauslassventil, ausgebildet sein.

Bevorzugt ist der rohrförmige Abschnitt des Wasserfilterpatronenauslasses aus einem weicheren Material gefertigt, als das komplementäre, tankseitig angeordnete Wasserfilterpatronen-Anschlusselement insbesondere Tankauslassventil. Dadurch kann er sehr passgenau, ggf. mit leichtem Über- oder Untermaß zum komplementären Ventilelement, bevorzugt dessen Ventilstößel, gefertigt und in dieses ein- oder aufgesteckt werden.

Bei einer Ausführung bei der der erste Wasserfilterpatronenauslass in eine im Wassertankauslassventil ausgebildete Aufnahmeöffnung einsteckbar ausgebildet ist, bildet die radial äußere Wandung seines rohrförmigen Abschnitts eine Dichtfläche zur Anlage an der radial inneren Fläche der komplementären Aufnahmeöffnung am Tankauslassventil. Durch das vergleichsweise weichere Material und ggf. einem leichten Übermaß kann der rohrförmige Abschnitt einen besonders festen und gut dichtenden Presssitz mit der Aufnahmeöffnung am Tankventil ausbilden.

Die Fixierkräfte dieses Presssitzes sind so groß, dass diese auch zuverlässig einer Zugwirkung entgegenstehen, die ggf. während der Entnahme des Wassertanks von der Getränke aufbereitenden Maschine bei einem vorübergehenden geräteseitigen Festsitzen des Tankventils auftreten können.

Bei einer anderen Ausführung ist der erste Wasserfilterpatronenauslass auf das Wassertankauslassventil aufsteckbar ausgebildet, vorzugsweise auf dessen Ventilstößel. Dabei bildet die radial innere Wandung seines rohrförmigen Abschnitts eine Dichtfläche zur Anlage an der radial äußeren Fläche des komplementären Aufnahmeteils am Tankauslassventil. Auch hierbei kann durch das vergleichsweise weichere Material und ggf. einem leichten Untermaß der rohrförmige Abschnitt einen besonders festen und gut dichtenden Presssitz mit der Aufnahmeöffnung am Tankventil ausbilden und wie zu der vorigen Ausführungsform beschrieben, einem Abziehen des Wasserfilterpatronenauslasses zuverlässig widerstehen.

Der rohrförmige Abschnitt kann auch in dieser Ausführung eine radial gegenüber dem komplementären, tankseitig angeordneten Wasserfilterpatronen-Anschlusselement wirkende Dichtfläche ausbilden. In diesem Fall an seiner radial inneren Fläche, die gegenüber einer radial äußeren Fläche am Tankauslassventil anliegt.

Der erste der beiden konzentrisch zueinander angeordneten Wasserfilterpatronenauslässe ist einem ersten durch die Wasserfilterpatrone ausgebildeten Strömungskanal zugeordnet und der zweite Wasserfilterpatronenauslass einem vom ersten Strömungskanal zumindest abschnittsweise getrennt ausgebildeten zweiten Strömungskanal durch die Wasserfilterpatrone zugeordnet.

Der erste Strömungskanal umfasst eine zumindest axial, vorzugsweise auch radial im Gehäuse der Wasserfilterpatrone beweglich angeordnete Filterkammer. Dadurch kann der erste Wasserfilterpatronenauslass fest mit der Filterkammer verbunden sein, z. B. in der Form eines an die Filterkammer angeformten Auslassstutzens. Dieser kann wie bereits oben beschrieben fest mit dem Tankauslassventil verbunden werden, z. B. mittels einer Steckverbindung.

An der beweglich angeordneten Filterkammer und/oder in einer komplementären Aufnahmekammer für die Filterkammer in der Wasserfilterpatrone können Abstandsrippen und/oder Abstandsnoppen oder dgl. zur Beabstandung der beiden zueinander ausgebildet sein. Dadurch kann ein gewünschter Durchflussquerschnitt zwischen der Wandung der Aufnahmekammer und dem Gehäuses der beweglich darin angeordneten Filterkammer sichergestellt werden, welcher z.B. Teil des zweiten Strömungskanals der Wasserfilterpatrone sein kann.

Vorzugsweise ist die komplementäre Aufnahmekammer für die Filterkammer als von Filtermaterial freie Strömungskammer als Teil des zweiten Strömungskanals ausgebildet. Dadurch kann die Filterkammer möglichst ungehindert bewegbar in der Aufnahmekammer angeordnet werden und der Bewegung des Tankventils in o.a. Weise folgen.

Vorzugsweise ist zumindest in einem der beiden Strömungskanäle ein Rückschlagventil angeordnet. Dadurch kann in der Filterpatrone ein Sicherheitselement gegen unerwünschtes Rücksaugen aus einem stromabwärtingen Leitungsbereich für den betreffenden Strömungskanal bereitgestellt werden, insbesondere gegen unerwünschtes Rücksaugen aus dem anderen Strömungskanal.

Besonders bevorzugt ist auch im zweiten der beiden Strömungskanäle ein Rückschlagventil angeordnet. Damit kann für beide Strömungskanäle ein zuverlässiger Schutz gegen ein Rücksaugen von Flüssigkeit aus einem stromabwärtigen Bereich gewährleistet werden.

Die Wasserfilterpatrone kann auch ein patronenseitiges Fixierelement zur Interaktion mit einem komplementären, tankseitigen Wasserfilterpatronen-Fixierelement aufweisen, insbesondere in der Form eines Bajonettverschlusses. Damit ist die Bereitstellung einer festen Verbindung zwischen Wasserfilterpatrone und dem Wassertank möglich. Dies wirkt sich auch positionsstabilisierend und damit positiv auf die Wirkung der an der Wasserfilterpatrone und dem Wassertank ausgebildeten und/oder angeordneten Dichtelemente aus.

In der Filterkammer kann ein Ionentauschermaterial angeordnet sein. Mit diesem kann das darüber geleitete Wasser soweit entkalkt werden, dass bei einer nachfolgenden Erhitzung keine oder wenigstens nur geringe Kalkmengen auskristallisieren.

Die Wasserfilterpatrone kann auch einen Partikelfilter und/oder einen Aktivkohlefilter umfassen. Der Partikelfilter schützt gegen grobe Verunreinigungen, der Aktivkohlefilter stellt die unbedenkliche Genießbarkeit des die Wasserfilterpatronen durchlaufenen Wassers sicher.

Das tankseitig angeordnete, komplementäre Wasserfilterpatronen-Anschlusselement, das insbesondere als Tankauslassventil ausgebildet ist, ist als Doppelventil mit konzentrisch angeordneten Ventildurchgängen ausgebildet. Dies ermöglicht den Anschluss der Wasserfilterpatrone mit ihren beiden ebenfalls konzentrisch angeordneten Wasserpatronenauslässen an ein einzelnes Anschlusselement, was, wie o.a. ausgeführt, der Zuverlässigkeit der Verbindungsabdichtungen massiv entgegenkommt.

Die beiden Ventile des Doppelventils bilden je ein federbelastetes Ventil aus. Dadurch können sie, im von außen unbelasteten Zustand, aufgrund der von der jeweiligen Feder auf den jeweiligen Ventilstößel wirkenden Schließkraft den Wassertank abdichten. Der Tank kann mit zu bevorratendem Wasser befüllt werden. Erst wenn zumindest gegen einen dieser Ventilstößel gedrückt wird, öffnet das betreffende Ventil gegen die auf ihn wirkende Federkraft und ggf. im Wassertank bevorratetes Wasser kann dann auslaufen, bzw. im an eine Getränke aufbereitenden Maschine angeschlossenen Zustand durch diese aus dem Wassertank bezogen werden.

Um eine betriebssichere Verbindung zwischen Wassertank und einer Getränke aufbereitenden Maschine bereitzustellen, kann am Wassertank bevorzugt auch ein tankseitiger Geräteanschluss mit zwei konzentrisch zueinander angeordneten Wasserauslässen ausgebildet sein. Dieser tankseitige Geräteanschluss ist vorzugsweise komplementär zu einem geräteseitig angeordneten Tankanschlusselement ausgebildet und wirkt dementsprechend mit diesem zur Wasserversorgung der Getränke aufbereitenden Maschine zusammen.

Die Erfindung betrifft auch eine **Wasser aufbereitende Maschine** mit Wassertank und Wasserfilterpatrone. Diese zeichnet sich dadurch aus, dass der Wassertank und die Wasserfilterpatrone nach einem der vorangehenden beschriebenen Ausführungsformen ausgebildet sind.

Insbesondere umfasst die Getränke aufbereitenden Maschine einen zu einem tankseitigen Geräteanschluss eines Wassertanks mit zwei konzentrisch zueinander angeordneten Wasserauslässen gemäß einer der oben beschriebenen Ausführungsformen komplementäres geräteseitig angeordneten oder anordenbaren Tankanschluss.

Dieser Tankanschluss wirkt beim Verbinden des Wassertanks mit der Getränke aufbereitenden Maschine öffnend auf die beiden Ventile des Doppelventils, so dass die Maschine durch die Wasserfilterpatrone über zwei unterschiedliche Filterstrecken aufbereitetes Wasser aus dem Wassertank beziehen kann. Einmal für die Bereitstellung von kalt aufzubereitenden Getränken und einmal für die Bereitstellung von heiß aufzubereitenden Getränken.

### Beschreibung eines Ausführungsbeispiels:

Nachfolgend wird die Erfindung anhand der Figuren näher erläutert.

Es zeigen beispielhaft und schematisch:
- Figur 1:: eine Teilansicht auf einen Wassertank mit einer darin eingesetzten Wasserfilterpatrone in Schnittdarstellung mit zwei konzentrisch zueinander angeordneten Wasserfilterpatronenauslässen und mit einem tankseitigen Maschinenanschlusselement sowie ein davon beabstandetes, maschinenseitiges Tankanschlusselement.
- Figur 2:: Eine Darstellung wie in Figur 1, jedoch mit zusammengefügten Anschlusselementen.
- Figur 3:: Eine ähnliche Ansicht wie in Fig. 2, jedoch mit Fokus auf die Wasserfilterpatrone mit zwei hydraulisch getrennten Strömungskanälen und den zwei konzentrisch zueinander angeordneten Wasserfilterpatronenauslässen zur Bereitstellung zweier unterschiedlich aufbereiteter Filtratströme.

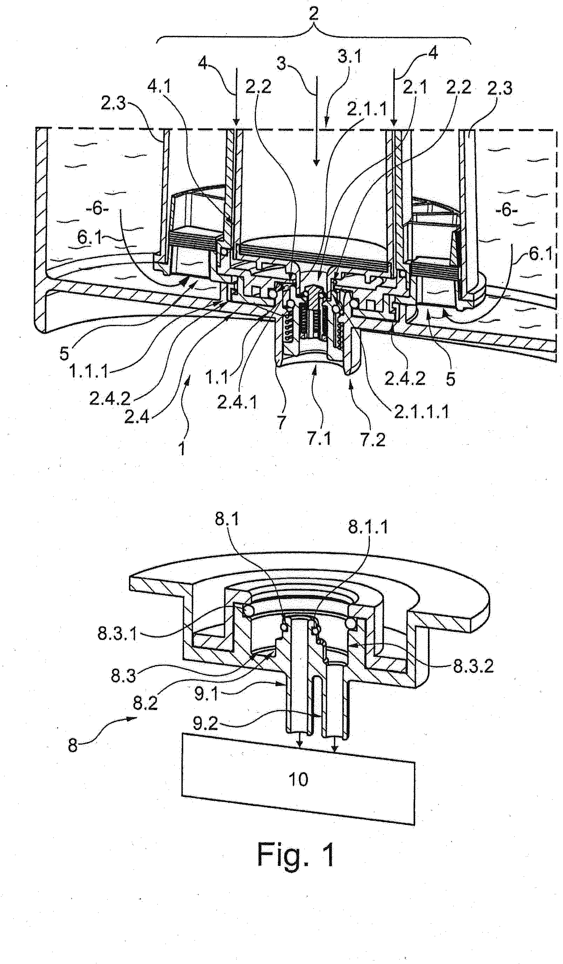

Dementsprechend zeigt die **Figur 1** eine ausschnittsweise Schnittdarstellung eines Wassertanks 1 mit darin eingesetzter Wasserfilterpatrone 2.

Die Wasserfilterpatrone 2 weist zwei konzentrisch zueinander angeordnete Wasserfilterpatronenauslässe auf, einen ersten inneren Wasserfilterpatronenauslass 2.1 und einem zweiten, äußeren Wasserfilterpatronenauslass 2.2. Diese sind zwei durch die Wasserfilterpatrone 2 führenden, hydraulisch voneinander getrennten Strömungskanälen zugeordnet, einem ersten Strömungskanal 3 und einem zweiten Strömungskanal 4.

Gespeist wird die Wasserfilterpatrone 2 mit im Wassertank 1 bevorratetem Wasser 6 über deren Einlass 5. Die Fließrichtung des Wassers 6 ist symbolisch durch die Pfeile 6.1 dargestellt.

Der Wassertank 1 umfasst ein sich unterhalb seines Bodens 1.2 von diesem weg erstreckendes, tankseitiges Maschinenanschlusselement 7. Dieses Maschinenanschlusselement 7 ist hülsenartig ausgebildet und zur dichtenden Verbindung mit einem vom Tank 1 beabstandet dargestellten, maschinenseitigen Tankanschlusselement 8 vorgesehen. Das Tankanschlusselement 8 weist zur dichten Interaktion zwischen Wassertank und Getränke aufbereitender Maschine eine komplementär geformte Ausnehmung/Aufnahme 8.3 zur Aufnahme des Maschinenanschlusselements 7 auf. Zur Erhöhung der Dichtwirkung dieser Verbindung kann ein Dichtelement 8.3.1, z.B. ein O-Ring, zwischen Maschinenanschlusselement 7 und Ausnehmung/Aufnahme 8.3 bereitgestellt werden. Dieses Dichtelement 8.3.1 ist bevorzugt an der Ausnehmung/Aufnahme 8.3 angeordnet.

Das Maschinenanschlusselement 7 umfasst im Weiteren auch zwei in ihm konzentrisch zueinander angeordnete Wassertankauslassventile 7.1, 7.2. Das konzentrisch innere Wassertankauslassventil 7.1 ist zum Öffnen und Schließen des ersten Strömungskanals 3 durch die Wasserfilterpatrone 2 ausgebildet. Das konzentrisch äußere Wassertankauslassventil 7.2 ist zum Öffnen und Schließen des zweiten, vom ersten getrennt ausgebildeten Strömungskanals 4 durch die Wasserfilterpatrone 2 ausgebildet.

Das erste Wassertankauslassventil 7.1 ist in.einem Bauteil des Maschinenanschlusselementes 7 angeordnet, welches selbst als Ventilstößel des zweiten Wassertankauslassventils 7.2 wirkt. Es umfasst einen Ventilsitz, der vorzugsweise als Teil des zweiten Wassertankauslassventils 7.2 ausgebildet ist. Der Ventilstößel dieses ersten Wassertankauslassventils 7.1 ist konzentrisch in einer Öffnung des Ventilstößels des zweiten Wassertankauslassventils 7.2 aufgenommen und insbesondere mittels einer Rückstellfeder gegen den Ventilsitz anliegend, dichtend vorgespannt. Zur Erhöhung der Dichtwirkung ist in dieser Ausführung ein Dichtelement in der Form eines O-Rings zwischen Ventilsitz und Ventilstößel angeordnet.

Dieses erste Wassertankauslassventil 7.1 ist in dichtendem Zustand mit dem Ventilstößel des zweiten Wassertankauslassventils 7.2 mitbeweglich ausgebildet. D.h., wenn der Ventilstößel des zweiten, äußeren Wassertankauslassventils 7.2 durch Betätigung angehoben wird, also gegen das Innere des Wassertanks gedrückt wird, z. B. durch Aufsetzen des tankseitigen Maschinenanschlusselementes 7 auf das komplementäre Aktivierungselement 8.2 des geräteseitigen Tankanschlusselements, hat das grundsätzlich keine Auswirkung auf den Schließzustand des ersten, inneren Wassertankauslassventils 7.1. Dieses bleibt, ausgehend von einer Ruhestellung, weiterhin geschlossen.

Um bei im Wassertank 1 eingesetzter Wasserfilterpatrone 2 eine dauerhaft zuverlässige Abdichtung zischen dem Anschlussstutzen ersten Wasserfilterpatronenauslass 2.1, hier in der Form des rohrförmigen Abschnitts 2.1.1, auch bei einer solchen zumindest axialen Positionsveränderung des diesem zugeordneten, ersten Wassertankauslassventils 7.1 sicherzustellen, ist die daran anschließende Filterkammer 3.1 ebenfalls zumindest axial in der Aufnahmekammer der Wasserfilterpatrone 2 angeordnet.

Dies hat die Wirkung, dass unabhängig vom Schließzustand des zweiten, äußeren Wassertankauslassventils 7.2 das erste, innere Wassertankauslassventil 7.1 bei betriebsüblicher Handhabung solange geschlossen bleibt, bis es durch ein zu ihm komplementäres Aktivierungselement 8.1 am geräteseitigen Tankanschlusselement 8 aktiviert wird. Und das ist, bei betriebsgemäßer Handhabung, nur bei auf das maschinenseitige Tankanschlusselement aufgesetztem Wassertank möglich.

Die zuverlässig Dichtwirkung zwischen dem ersten Wassertankauslassventil 7.1 und dem rohrförmigen Abschnitt 2.1.1 ist dadurch auch für den Fall sichergestellt, dass bei der Entnahme des Wassertanks 1 das zweite Wassertankauslassventil 7.2 ggf. am maschinenseitigen Tankanschlusselement 8 festsitzen sollte. Denn eine mögliche Zugwirkung auf die Verbindung zwischen erstem Wassertankauslassventil 7.1 und dem rohrförmigen Abschnitt 2.1.1 wird dadurch verhindert, dass die an letzteren anschließende Filterkammer 3.1 axial beweglich und im betriebsgemäßen Zustand angehoben in der Wasserfilterpatrone 2 angeordnet ist.

Sollte also das zweite Wassertankauslassventil 7.2 bei der Entnahme des Wassertanks 1 fest sitzen und sich deshalb nicht gleich lösen, so sorgt das axiale Spiel der Filterkammer 3.1 für ausreichend relative Bewegungsfreiheit des mit ihr fest verbundenen Abschnitts 2.1.1 gegenüber der Filterpatrone 2, so dass dieser die relative Bewegung des zweiten Wassertankauslassventils 7.2 gegenüber der Wasserfilterpatrone 1 so weit mitmachen kann, bis sich der Ventilstößel des zweiten Wassertankauslassventils 7.2 zwangsweise aus der Ausnehmung/Aufnahme 8.3 des maschinenseitigen Tankanschlusselementes 8 löst. Dies geschieht durch das den Bewegungsbereich des ersten Ventilstößels begrenzende mechanisches Aufsitzen des Dichtbereichs des Ventilstößels auf dem Ventilsitz. Sobald der.Ventilstößel am Ventilstößel anliegt muss er zwangsweise aus der Ausnehmung/Aufnahme 8.3 des Maschinenseitigen Tankanschlusselementes ausrücken.

Somit kann solange kein Wasser über den ersten Filterkanal 3 aus dem Wassertank 1 austreten bis das Wassertankauslassventil 7.1 ordnungsgemäß durch Aktivierungselement 8.1 angehoben wird.

In der Filterkammer 3.1 kann beispielsweise ein Entkalkungsmittel angeordnet sein, z.B. ein Ionentauscher, um das mit der Filterpatrone 2 aufzubereitende Wasser 6 möglichst gegen Ausfällungen bei dessen Erhitzung zur Zubereitung von Heißgetränken zu behandeln. Vorzugsweise ist der Filterkammer 3.1 in der Filterpatrone 2 stromaufwärts bereits eine weitere Filterstrecke vorgeschaltet, z.B. ein Aktivkohlefilter zur Entkeimung und/oder Geschmacksverbesserung, insbesondere auch zur Aufbereitung des über den Strömungskanal 4 an der Filterkammer 3.1 vorbeigeführten Wassers 6.

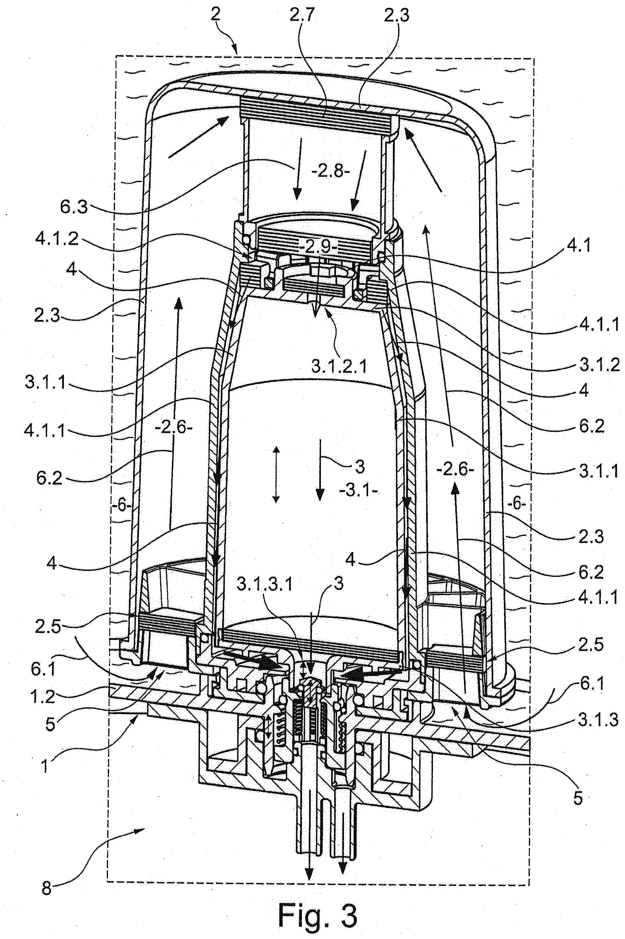

Der Ventilstößel des zweiten Wassertankauslassventils 7.2 ist, wiederum im vom maschinenseitigen Tankanschlusselement 8 abgenommenen Zustand des Wassertanks 1, ebenfalls mittels einer Rückstellfeder dichtend gegen den Ventilsitz des zweiten Wassertankauslassventils 7.2 gedrückt, vorzugsweise ebenfalls unter Verwendung eines zwischenliegenden Dichtelementes, insbesondere eines O-Rings. Das zweite Wassertankauslassventil 7.2 verschließt bzw. öffnet den Strömungskanal 4 der Wasserfilterpatrone 2 in deren im Wassertank eingesteckten Zustand, wie in der Figur 1 dargestellt. Der Strömungskanal 4 verläuft zwischen der Außenwand der zumindest axial in der Filterpatrone 2 beweglich angeordneten Filterkammer 3.1 und der Innenwand der diese Filterkammer 3.1 beweglich aufnehmenden Aufnahmekammer 4.1 (s. auch Fig. 3).

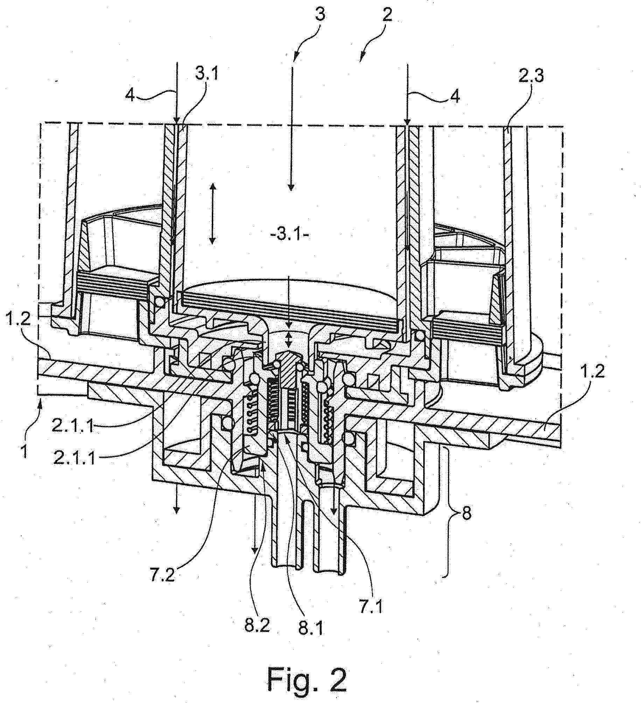

Um bei in das maschinenseitige Tankanschlusselement 8 eingesetztem tankseitigen Maschinenanschlusselement 7 (s. Fig. 2) auch die Dichtwirkung nach außen zu verbessern, kann zischen dem Maschinenanschlusselement 7 und der dazu komplementären Ausnehmung/Aufnahme im maschinenseitigen Tankanschlusselement 8 ebenfalls ein Dichtelement 8.3.1 angeordnet sein, bevorzugt wiederum in der Form eines O-Rings. Zur Erhöhung der Dichtwirkung nach innen hin kann ein Dichtelement 8.1.1 angeordnet sein, bevorzugt wiederum in der Form eines O-Rings.

Der Vollständigkeit halber ist schematisch eine Getränke aufbereitende Maschine 10 an die beiden vom maschinenseitigen Tankanschlusselement 8 abgehenden Leitungen 9.1 und 9.2 für die Weiterleitung der beiden hydraulisch voneinander getrennten Filtratströme der Strömungskanäle 3 und 4 dargestellt. Der Filtratstrom des Strömungskanals 3 wird zentral durch das maschinenseitige Tankanschlusselement 8 in die Leitung 9.1 hindurchgeleitet. Der Filtratstrom des Strömungskanals 4 wird über die von der Ausnehmung/Aufnahme 8.3 gebildeten Kammer 8.3.2 an die Leitung 9.2 weitergeführt.

An der Innenseite des Wassertanks 1 ist die Wasserfilterpatrone 2 mit einem patronenseitigen Tankanschlusselement 2.4 an einem tankseitigen Wasserfilterpatronen-Anschlusselement 1.1 angeschlossen. Vorzugsweise handelt es sich hierbei um zwei zueinander komplementäre, hülsenartige Bauteile, die ineinandersteckbar ausgebildet sind. Zur Erhöhung der Dichtwirkung kann zwischen ihnen ein Dichtelement 2.4.1 angeordnet sein, z.B. i.d.F. eines O-Rings.

Zur Fixierung am Wassertank 1 kann die der Wasserfilterpatrone 2 ein patronenseitiges Fixierelement 2.4.2 zur Interaktion mit einem komplementären, tankseitigen Wasserfilterpatronen-Fixierelement 1.1.1 aufweisen, insbesondere in der Form eines Bajonettverschlusses.

Die **Figur 2** zeigt, ebenfalls ausschnittweise und in Schnittdarstellung, den Wassertank 1 mit darin eingesetzter Wasserfilterpatrone 2, wobei jedoch im Unterschied zur Figur 1 das tankseitige Maschinenanschlusselement 7 mit dem maschinenseitigen Tankanschlusselement 8 verbunden / in dieses eingesteckt ist.

Der Ventilstößel des ersten Wassertankauslassventils 7.1 sitzt auf dem Aktivierungselement 8.1 auf und der Ventilstößel des zweiten Wassertankauslassventils 7.2 sitzt auf dem Aktivierungselement 8.2 auf, so dass die beiden Wassertankauslassventile des Wassertanks 1 geöffnet sind.

Der rohrförmige Abschnitt 2.1.1 des ersten Wasserpatronenauslasses 2.1 ist aus einem weicheren Material gefertigt als das komplementäre, tankseitig angeordnete Wasserfilterpatronen-Anschlusselement 1.1. Es ist steckelementartig mit letzterem dichtend verbunden. Im vorliegenden Beispiel ist der rohrförmige Abschnitt 2.1.1 in eine Ausnehmung des Ventilstößels des zweiten, radial äußeren der beiden konzentrisch zueinander angeordneten Wassertankauslassventile 7.1 und 7.2 eingesteckt. Alternativ könnte der rohrförmige Abschnitt 2.1.1 auch so ausgebildet werden, dass er auf den Ventilstößel des zweiten Wassertankauslassventils 7.2 dichtend aufsteckbar ist.

Die **Figur 3** zeigt, wiederum ausschnittweise und in Schnittdarstellung, den Wassertank 1 mit darin eingesetzter Wasserfilterpatrone 2 wie in Figur 2, wobei hier das Augenmerk auf der Filterpatrone 2 liegt, die über die gesamte Höhenerstreckung ihres Gehäuses 2.3 dargestellt ist.

Im Bereich des Einlasses 5 der Filterpatrone 2 ist ein erstes Filter- und/oder Rückhalteelement 2.5 angeordnet, z.B. i.d.F. eines Flieses oder Siebs. Dahinter schließt im Inneren des Gehäuses 2.3 eine Filterkammer 2.6 an, in der z.B. ein Aktivkohlefilter angeordnet sein kann.

Durch diese Filterkammer 2.6 fließt das aus dem Wassertank 1 in die Wasserfilterpatrone 2 einströmende Wasser 6 in Richtung des Pfeils 6.2. An der dem Einlass 5 gegen überliegenden Innenseite des Gehäuses 2.3 der Wasserfilterpatrone 2 ist ein weiteres Filter- und/oder Rückhalteelement 2.7 angeordnet, z.B. ebenfalls i.d.F. eines Flieses oder Siebs. Dieses kann auch elastische Eigenschaften aufweisen, z.B. um beim Zusammenbau der Wasserfilterpatrone weitere in deren Gehäuse aufzunehmende Bauteile abzustützen, insbesondere zumindest unter leichter Vorspannung. Dies bewirkt im Weiteren eine erhöhte Dichtwirkung zwischen den einzelnen Bauteilen der Wasserfilterpatrone 2 gegen unerwünschtes wandern von granularen Teilen.

In Strömungsrichtung des Wassers 6 schließt im Inneren der Wasserfilterpatrone 2 an das Filter- und/oder Rückhalteelement 2.7 eine Filterkammer 2.8 an. Diese kann z.B. mit einem Partikelfilter ausgestattet und mit einem weiteren Filter- und/oder Rückhalteelement 2.9 stromabwärts gegen austreten von Filtermaterial verschlossen aber dennoch für das aufzubereitende Wasser 6 durchlässig sein. Diese Filterkammer 2.8 kann als Einlegebauteil ausgebildet sein, ggf. umfassend die beiden Filter- und/oder Rückhalteelemente 2.7 und 2.9.

Dem Filter- und/oder Rückhalteelement 2.9 folgt in Strömungsrichtung des Wassers 6 entsprechend der Richtung der Pfeile 6.3 die Aufnahmekammer 4.1. Sie wird durch die Wandung 4.1.1 begrenzt und von der Filterkammer 2.6 wasserdicht abgetrennt.

Im Inneren der Aufnahmekammer 4.1 ist die Filterkammer 3.1 zumindest axial beweglich, vorzugsweise aber auch radial beweglich aufgenommen. Diese Filterkammer 3.1 ist durch deren Wandung 3.1.1 und deren stirnseitige Deckel- und Bodenelemente 3.1.2 und 3.1.3 gegenüber der Aufnahmekammer 4.1 wasserdicht abgeschlossen.

Am Deckelelement 3.1.2 ist eine Einlassöffnung 3.1.2.1 in die Filterkammer 3.1 hinein ausgebildet. Am Bodenelement 3.1.3 ist ebenfalls eine Öffnung 3.1.3.1 ausgebildet. Bei dieser handelt es sich um die Auslassöffnung für den Austritt des in der Filterkammer 3.1. weiter aufbereiteten Wassers. Sowohl an der Einlass- als auch an der Auslassöffnung sind jeweils ein weiteres Filter- und/oder Rückhalteelement angeordnet, um einen Austritt von Filtermaterial aus der Filterkammer 3.1 zu verhindern, aber Wasser durchfliesen lassen zu können.

Um den Auslass 3.1.3.1 ist am Boden 3.1.3 der Filterkammer 3.1 mit ihm fest verbunden der weiter oben bereits beschriebene, erste Wasserfilterpatronenauslass 2.1 in der Form des rohrförmigen Abschnittes 2.1.1 angeformt. Dieser ist aus einem weicheren Material als der Ventilstößel des zweiten Tankauslassventils 7.2 ausgebildet und klemmend in dessen Ausnehmung eingesteckt. Dadurch können der rohrförmige Abschnitt 2.1.1 und die mit ihm fest verbundene Filterkammer 3.1 eine dem Ventilstößel des zweiten Tankauslassventils 7.2 bei der Entnahme des Wassertanks aus dem maschinenseitigen Tankanschlusselement 8 ggf. durch Klemmen des Ventilstößels in der Ausnehmung/Aufnehme 8.3 aufgeprägte Bewegung mitmachen, insbesondere axial, vorzugsweise aber auch radial.

Das von der Wasserfilterpatrone 2 aufzubereitende aus dem Wassertank entnommene Wasser 6 strömt bis in den Einlassbereich der Aufnahmekammer 4.1 gemäß der Richtung der Peile 6.1 bis 6.3 als ein durch die durchflossenen Filterstrecken 2.5 bis 2.9 gemeinsam aufbereiteter Wasserstrom. Im Einlassbereich der Aufnahmekammer 4.1 wird dieser Wasserstrom in zwei hydraulisch voneinander getrennte Strömungspfade 3 und 4 aufgeteilt.

Der erste Strömungspfad 3 führt durch die Filterkammer 3.1 und das darin angeordnete Entkalkungsmittel, wie z.B. einen Ionentauscher. Dadurch wird das für eine Aufbereitung eines Heißgetränks durch die Getränke aufbereitende Maschine 10 aus dem Wassertank 1 zu entnehmende Wasser entkalkt (s. Fig. 1).

Der zweite Strömungspfad 4 führt das durch die Filterstrecken 2.5 bis 2.9 bereits aufbereitete Wasser 6 durch die Aufnahmekammer 4.1 an der Filterkammer 3.1 vorbei zum zweiten Wasserfilterpatronenauslass 2.2. Das über diesen Strömungspfad 4 geleitete Wasser 6 ist zur Aufbereitung eines Kaltgetränkes mittels der Getränke aufbereitenden Maschine 10 vorgesehen.

Um die Filterkammer 3.1 beabstandet von der Wandung 4.1.1 in der Aufnahmekammer positionieren zu können, sind an der Wandung 4.1.1 und/oder an der Wandung 3.1.1 der Filterkammer 3.1 Rippen und/oder Noppen oder dgl. Abstandshalteelemente 4.1.2 angeordnet. In der Figur 3 sind solche beispielhaft im Einlassbereich der Aufnahmekammer dargestellt.

Zur Vermeidung eines Rücksaugeeffektes aus dem jeweils anderen der beiden Strömungskanäle 3 und 4 kann zumindest in einem der beiden Strömungskanäle, vorzugsweise jedoch in beiden ein Rückschlagventil angeordnet sein.

### Bezugszeichenliste:

1 Wassertank
1.1 tankseitiges Wasserfilterpatronen-Anschlusselement
1.1.1 tankseitiges Fixierelement
1.2 Boden
2 Wasserfilterpatrone
2.1 erster Wasserfilterpatronenauslass
2.1.1 rohrförmiger Abschnitt
2.1.1.1 Dichtfläche
2.2 zweiter Wasserfilterpatronenauslass
2.3 Gehäuse
2.4 patronenseitiges Tankanschlusselement
2.4.1 Dichtelement
2.4.2 patronenseitiges Fixierelement
2.5 Filter- und/oder Rückhalteelement
2.6 Filterkammer / Aktivkohle
2.7 Filter- und/oder Rückhalteelement
2.8 Filterkammer
2.9 Filter- und/oder Rückhalteelement
3 erster Strömungspfad
3.1 Filterkammer
3.1.2 Deckel
3.1.3 Boden
3.1.3.1 Auslass
4 zweiter Strömungspfad
4.1 Aufnahmekammer
4.1.1 Wandung
4.1.2 Rippen/Noppen/Abstandshaltelemente
5 Einlass
6 Wasser
6.1 Pfeil
6.2 Pfeil
6.3 Pfeil
7 tankseitiges Maschinenanschlusselement
7.1 erstes Wassertankauslassventil
7.2 zweites Wassertankauslassventil
8 maschinenseitiges Tankanschlusselement
8.1 Aktivierungselement
8.1.1 Dichtelement
8.2 Aktivierungselement
8.3 Ausnehmung/Aufnahme
8.3.1 Dichtelement
8.3.2 Kammer
9.1 Leitung
9.2 Leitung
10 Getränke aufbereitende Maschine/Gerät

## Patentansprüche

1. **Wassertank (1) mit Wasserfilterpatrone (2), dadurch gekennzeichnet, dass** die Wasserfilterpatrone (2) zwei konzentrisch zueinander angeordnete Wasserfilterpatronenauslässe (2.1; 2.2) für zwei hydraulisch voneinander getrennte Strömungskanäle (3; 4) zur Bereitstellung zweier unterschiedlich aufbereiteter Filtratströme umfasst.

2. Wassertank mit Wasserfilterpatrone nach Anspruch 1, **dadurch gekennzeichnet, dass** ein erster (2.1) der beiden konzentrisch zueinander angeordneten Wasserfilterpatronenauslässe (2.1; 2.2) zumindest axial, vorzugsweise auch radial im Gehäuse (2.3) der Wasserfilterpatrone (2) beweglich angeordnet ist.

3. Wassertank mit Wasserfilterpatrone nach Anspruch 1 oder 2, **dadurch gekennzeichnet, dass** der erste, beweglich angeordnete Wasserfilterpatronenauslass (2.1) steckelementartig mit einem rohrförmigen Abschnitt (2.1.1) zur wasserdichten Interaktion mit einem komplementären, tankseitig angeordneten Wasserfilterpatronen-Anschlusselement (1.1), insbesondere einem Tankauslassventil (7.2), ausgebildet ist.

4. Wassertank mit Wasserfilterpatrone nach einem der vorangehenden Ansprüche, **dadurch gekennzeichnet, dass** der rohrförmige Abschnitt (2.1.1) aus einem weicheren Material gefertigt ist, als das komplementäre, tankseitig angeordnete Wasserfilterpatronen-Anschlusselement (1.1), insbesondere als das Tankauslassventil (7.2).

5. Wassertank mit Wasserfilterpatrone nach einem der vorangehenden Ansprüche, **dadurch gekennzeichnet, dass** der rohrförmige Abschnitt (2.1.1) eine radial gegenüber dem komplementären, tankseitig angeordneten Wasserfilterpatronen-Anschlusselement (1.1) wirkende Dichtfläche (2.1.1.1) ausbildet.

6. Wassertank mit Wasserfilterpatrone nach einem der vorangehenden Ansprüche, **dadurch gekennzeichnet, dass** der erste (2.1) der beiden konzentrisch zueinander angeordneten Wasserfilterpatronenauslässe (2.1; 2.2) einem ersten durch die Wasserfilterpatrone (2) ausgebildeten Strömungskanal (3) zugeordnet ist und der zweite Wasserfilterpatronenauslass (2.2) einem vom ersten Strömungskanal (3) zumindest abschnittsweise getrennt ausgebildeten zweiten Strömungskanal (4) durch die Wasserfilterpatrone (2) zugeordnet ist.

7. Wassertank mit Wasserfilterpatrone nach einem der vorangehenden Ansprüche, **dadurch gekennzeichnet, dass** der erste Strömungskanal (3) eine zumindest axial, vorzugsweise auch radial im Gehäuse (2.3) der (2) Wasserfilterpatrone beweglich angeordnete Filterkammer (3.1) umfasst.

8. Wassertank mit Wasserfilterpatrone nach einem der vorangehenden Ansprüche, **dadurch gekennzeichnet, dass** an der beweglich angeordneten Filterkammer (3.1) und/oder in einer komplementären Aufnahmekammer (4.1) für die Filterkammer (3.1) in der Wasserfilterpatrone (2) Abstandsrippen und/oder Abstandsnoppen oder dgl. zur Beabstandung der beiden Kammern 3.1; 4.1) zueinander ausgebildet sind.

9. Wassertank mit Wasserfilterpatrone nach einem der vorangehenden Ansprüche, **dadurch gekennzeichnet, dass** die komplementäre Aufnahmekammer (4.1) für die Filterkammer (3.1) als von Filtermaterial freie Strömungskammer als Teil des zweiten Strömungskanals (4) ausgebildet ist.

10. Wassertank mit Wasserfilterpatrone nach einem der vorangehenden Ansprüche, **dadurch gekennzeichnet, dass** zumindest in einem der beiden Strömungskanäle (3; 4) ein Rückschlagventil angeordnet ist.

11. Wassertank mit Wasserfilterpatrone nach einem der vorangehenden Ansprüche, **dadurch gekennzeichnet, dass** auch im zweiten der beiden Strömungskanäle (3; 4) ein Rückschlagventil angeordnet ist.

12. Wassertank mit Wasserfilterpatrone nach einem der vorangehenden Ansprüche, **dadurch gekennzeichnet, dass** die Wasserfilterpatrone (2) ein patronenseitiges Fixierelement (2.4.2) zur Interaktion mit einem komplementären, tankseitigen Wasserfilterpatronen-Fixierelement (1.1.1) aufweist, insbesondere in der Form eines Bajonettverschlusses.

13. Wassertank mit Wasserfilterpatrone nach einem der vorangehenden Ansprüche, **dadurch gekennzeichnet, dass** in der Filterkammer (3.1) ein Ionentauschermaterial angeordnet ist.

14. Wassertank mit Wasserfilterpatrone nach einem der vorangehenden Ansprüche, **dadurch gekennzeichnet, dass** die Wasserfilterpatrone (2) einen Partikelfilter und/oder einen Aktivkohlefilter umfasst.

15. Wassertank mit Wasserfilterpatrone nach einem der vorangehenden Ansprüche, **dadurch gekennzeichnet, dass** das tankseitig angeordnete, komplementäre Wasserfilterpatronen-Anschlusselement (1.1), das insbesondere als Tankauslassventil ausgebildet ist, ein Doppelventil mit konzentrisch angeordneten Ventilen (7.1; 7.2) umfasst.

16. Wassertank mit Wasserfilterpatrone nach einem der vorangehenden Ansprüche, **dadurch gekennzeichnet, dass** die beiden Ventile (7.1; 7.2) des Doppelventils je ein federbelastetes Ventil (7.1; 7.2) ausbilden.

17. Wassertank mit Wasserfilterpatrone nach einem der vorangehenden Ansprüche, **dadurch gekennzeichnet, dass** am Wassertank (1) ein tankseitiger Geräteanschluss (7) mit zwei konzentrisch zueinander angeordneten Wasserauslässen ausgebildet ist.

18. **Wasser aufbereitende Maschine** (10) mit Wassertank (1) mit Wasserfilterpatrone(2), **dadurch gekennzeichnet**, das Wassertank (1) und Wasserfilterpatrone (2) nach einem der vorangehenden Ansprüche ausgebildet sind.

## Claims

1. **Water tank (1) with water filter cartridge (2), characterized in that** the water filter cartridge (2) comprises two water filter cartridge outlets (2.1; 2.2) which are arranged concentrically to one another for two hydraulically separated flow channels (3; 4) for providing two differently processed filtrate flows.

2. Water tank with water filter cartridge according to Claim 1, **characterized in that** a first (2.1) of the two water filter cartridge outlets (2.1; 2.2) which are arranged concentrically to one another is arranged so as to be at least axially, preferably also radially, movable in the housing (2.3) of the water filter cartridge (2).

3. Water tank with water filter cartridge according to Claim 1 or 2, **characterized in that** the first movably arranged water filter cartridge outlet (2.1) is configured in the manner of a plug-in element with a tubular portion (2.1.1) for water-tight interaction with a complementary water filter cartridge connecting element (1.1), in particular a tank outlet valve (7.2), arranged on the tank side.

4. Water tank with water filter cartridge according to one of the preceding claims, **characterized in that** the tubular portion (2.1.1) is manufactured from a more flexible material than the complementary water filter cartridge connecting element (1.1), in particular than the tank outlet valve (7.2), arranged on the tank side.

5. Water tank with water filter cartridge according to one of the preceding claims, **characterized in that** the tubular portion (2.1.1) forms a sealing surface (2.1.1.1) which acts radially relative to the complementary water filter cartridge connecting element (1.1) arranged on the tank side.

6. Water tank with water filter cartridge according to one of the preceding claims, **characterized in that** the first (2.1) of the two water filter cartridge outlets (2.1; 2.2) which are arranged concentrically to one another is assigned to a first flow channel (3) formed by the water filter cartridge (2) and the second water filter cartridge outlet (2.2) is assigned to a second flow channel (4) which is configured at least in some portions separately from the first flow channel (3) through the water filter cartridge (2).

7. Water tank with water filter cartridge according to one of the preceding claims, **characterized in that** the first flow channel (3) comprises a filter chamber (3.1) which is arranged so as to be at least axially, preferably also radially, movable in the housing (2.3) of the (2) water filter cartridge.

8. Water tank with water filter cartridge according to one of the preceding claims, **characterized in that** spacing ribs and/or spacing studs or the like are formed on the movably arranged filter chamber (3.1) and/or in a complementary receiving chamber (4.1) for the filter chamber (3.1) in the water filter cartridge (2), for spacing apart the two chambers (3.1; 4.1) from one another.

9. Water tank with water filter cartridge according to one of the preceding claims, **characterized in that** the complementary receiving chamber (4.1) for the filter chamber (3.1) is configured as a flow chamber without filter material and as part of the second flow channel (4).

10. Water tank with water filter cartridge according to one of the preceding claims, **characterized in that** a non-return valve is arranged in at least one of the two flow channels (3; 4).

11. Water tank with water filter cartridge according to one of the preceding claims, **characterized in that** a non-return valve is also arranged in the second of the two flow channels (3; 4).

12. Water tank with water filter cartridge according to one of the preceding claims, **characterized in that** the water filter cartridge (2) has a cartridge-side fixing element (2.4.2) for interaction with a complementary tank-side water filter cartridge fixing element (1.1.1), in particular in the form of a bayonet closure.

13. Water tank with water filter cartridge according to one of the preceding claims, **characterized in that** an ion exchanger material is arranged in the filter chamber (3.1).

14. Water tank with water filter cartridge according to one of the preceding claims, **characterized in that** the water filter cartridge (2) comprises a particle filter and/or an activated carbon filter.

15. Water tank with water filter cartridge according to one of the preceding claims, **characterized in that** the complementary water filter cartridge connecting element (1.1) which is arranged on the tank side and which is configured, in particular, as the tank outlet valve, comprises a double valve with concentrically arranged valves (7.1; 7.2).

16. Water tank with water filter cartridge according to one of the preceding claims, **characterized in that** the two valves (7.1; 7.2) of the double valve in each case form a spring-loaded valve (7.1; 7.2).

17. Water tank with water filter cartridge according to one of the preceding claims, **characterized in that** a tank-side appliance connection (7), with two water outlets which are arranged concentrically to one another, is configured on the water tank (1).

18. **Water processing machine** (10) with water tank (1) with water filter cartridge (2), **characterized in that** the water tank (1) and water filter cartridge (2) are configured according to one of the preceding claims.

## Revendications

1. Réservoir d'eau (1) avec cartouche de filtre à eau (2), **caractérisé en ce que** la cartouche de filtre à eau (2) comprend deux sorties de cartouche de filtre à eau (2.1 ; 2.2) agencées de manière concentrique l'une par rapport à l'autre pour deux canaux d'écoulement (3 ; 4) séparés hydrauliquement l'un de l'autre pour fournir deux flux de filtrat traités différemment.

2. Réservoir d'eau avec cartouche de filtre à eau selon la revendication 1, **caractérisé en ce qu'**une première (2.1) des deux sorties de cartouche de filtre à eau (2.1 ; 2.2) agencées de manière concentrique l'une par rapport à l'autre est agencée de manière mobile au moins axialement, de préférence également radialement, dans le boîtier (2.3) de la cartouche de filtre à eau (2).

3. Réservoir d'eau avec cartouche de filtre à eau selon la revendication 1 ou 2, **caractérisé en ce que** la première sortie de cartouche de filtre à eau (2.1) agencée de manière mobile est réalisée à la manière d'un élément enfichable avec une section tubulaire (2.1.1) pour une interaction étanche à l'eau avec un élément de raccordement de cartouche de filtre à eau (1.1) complémentaire agencé côté réservoir, notamment une soupape de sortie de réservoir (7.2).

4. Réservoir d'eau avec cartouche de filtre à eau selon l'une quelconque des revendications précédentes, **caractérisé en ce que** la section tubulaire (2.1.1) est fabriquée dans un matériau plus souple que l'élément de raccordement de cartouche de filtre à eau (1.1) complémentaire agencé côté réservoir, notamment que la soupape de sortie de réservoir (7.2).

5. Réservoir d'eau avec cartouche de filtre à eau selon l'une quelconque des revendications précédentes, **caractérisé en ce que** la section tubulaire (2.1.1) réalise une surface d'étanchéité (2.1.1.1) agissant radialement par rapport à l'élément de raccordement de cartouche de filtre à eau (1.1) complémentaire agencé côté réservoir.

6. Réservoir d'eau avec cartouche de filtre à eau selon l'une quelconque des revendications précédentes, **caractérisé en ce que** la première (2.1) des deux sorties de cartouche de filtre à eau (2.1 ; 2.2) agencées concentriquement l'une par rapport à l'autre est associée à un premier canal d'écoulement (3) réalisé à travers la cartouche de filtre à eau (2) et la deuxième sortie de cartouche de filtre à eau (2.2) est associée à un deuxième canal d'écoulement (4) réalisé au moins par sections séparément du premier canal d'écoulement (3) à travers la cartouche de filtre à eau (2).

7. Réservoir d'eau avec cartouche de filtre à eau selon l'une quelconque des revendications précédentes, **caractérisée en ce que** le premier canal d'écoulement (3) comprend une chambre de filtre (3.1) agencée de manière mobile au moins axialement, de préférence également radialement, dans le boîtier (2.3) de la cartouche de filtre à eau (2).

8. Réservoir d'eau avec cartouche de filtre à eau selon l'une quelconque des revendications précédentes, **caractérisé en ce que** des nervures d'espacement et/ou des picots d'espacement ou similaires sont réalisés sur la chambre de filtre (3.1) agencée de manière mobile et/ou dans une chambre de réception (4.1) complémentaire pour la chambre de filtre (3.1) dans la cartouche de filtre à eau (2) pour espacer les deux chambres (3.1 ; 4.1) l'une de l'autre.

9. Réservoir d'eau avec cartouche de filtre à eau selon l'une quelconque des revendications précédentes, **caractérisée en ce que** la chambre de réception complémentaire (4.1) pour la chambre de filtre (3.1) est réalisée sous forme de chambre d'écoulement exempte de matériau filtrant faisant partie du deuxième canal d'écoulement (4).

10. Réservoir d'eau avec cartouche de filtre à eau selon l'une quelconque des revendications précédentes, **caractérisé en ce qu'**un clapet anti-retour est agencé dans au moins l'un des deux canaux d'écoulement (3 ; 4).

11. Réservoir d'eau avec cartouche de filtre à eau selon l'une quelconque des revendications précédentes, **caractérisé en ce qu'**un clapet anti-retour est également agencé dans le deuxième des deux canaux d'écoulement (3 ; 4).

12. Réservoir d'eau avec cartouche de filtre à eau selon l'une quelconque des revendications précédentes, **caractérisé en ce que** la cartouche de filtre à eau (2) présente un élément de fixation (2.4.2) côté cartouche pour l'interaction avec un élément de fixation de cartouche de filtre à eau (1.1.1) complémentaire côté réservoir, notamment sous la forme d'une fermeture à baïonnette.

13. Réservoir d'eau avec cartouche de filtre à eau selon l'une quelconque des revendications précédentes, **caractérisée en ce qu'**un matériau échangeur d'ions est agencé dans la chambre de filtre (3.1).

14. Réservoir d'eau avec cartouche de filtre à eau selon l'une quelconque des revendications précédentes, **caractérisé en ce que** la cartouche de filtre à eau (2) comprend un filtre à particules et/ou un filtre à charbon actif.

15. Réservoir d'eau avec cartouche de filtre à eau selon l'une quelconque des revendications précédentes, **caractérisé en ce que** l'élément de raccordement de cartouche de filtre à eau (1.1) complémentaire agencé côté réservoir, qui est notamment réalisé sous forme de soupape de sortie du réservoir, comprend une double soupape avec des soupapes (7.1 ; 7.2) agencées de manière concentrique.

16. Réservoir d'eau avec cartouche de filtre à eau selon l'une quelconque des revendications précédentes, **caractérisé en ce que** les deux soupapes (7.1 ; 7.2) de la double soupape réalisent chacune une soupape (7.1 ; 7.2) sollicitée par ressort.

17. Réservoir d'eau avec cartouche de filtre à eau selon l'une quelconque des revendications précédentes, **caractérisé en ce qu'**un raccord d'appareil (7) côté réservoir est réalisé sur le réservoir d'eau (1) avec deux sorties d'eau agencées de manière concentrique l'une par rapport à l'autre.

18. Machine de traitement d'eau (10) avec réservoir d'eau (1) et cartouche de filtre à eau (2), **caractérisée en ce que** le réservoir d'eau (1) et la cartouche de filtre à eau (2) sont réalisés selon l'une quelconque des revendications précédentes.
